# EUROPÄISCHE PATENTSCHRIFT

(11) **EP 2 759 731 B1**
(45) Veröffentlichungstag und Bekanntmachung des Hinweises auf die Patenterteilung: **07.08.2019**
(21) Anmeldenummer: 14164967.3
(22) Anmeldetag: 15.10.2006
(51) Int. Cl.: F16D 21/06, F16D 1/08

(54) **Kupplungseinrichtung zur Übertragung eines Drehmoments**
Coupling device for transferring a torque
Dispositif de couplage destiné à la transmission d'un couple

(30) Priorität: 17.10.2005 DE 102005049913; 14.11.2005 DE 102005054526; 02.12.2005 DE 102005057871; 02.03.2006 DE 102006010278
(43) Veröffentlichungstag der Anmeldung: 30.07.2014
(62) Teilanmeldung aus: 06828820.8
(73) Patentinhaber: BorgWarner, Inc., Auburn Hills, MI 48326-2872 (US)
(72) Erfinder: Schäfer, Michael, 68775 Ketsch (DE); Bölling, Jochen, 76534 Baden-Baden (DE); Ebner, Till, 64342 Seeheim-Jugenheim (DE); Strauss, Dietmar, 76703 Kraichtal (DE)
(74) Vertreter: Westphal, Mussgnug & Partner Patentanwälte mbB

(56) Entgegenhaltungen:
- WO-A-2005/121581
- DE-A1- 10 205 767
- DE-A1- 10 227 396
- GB-A- 276 000
- US-A- 2 625 415
- US-A- 4 875 796
- US-A- 5 674 026
- US-A1- 2003 083 136
- US-B1- 6 257 798

## Beschreibung

Die Erfindung bezieht sich auf eine Kopplungseinrichtung zur Übertragung eines Drehmoments zwischen einem Antriebselement und einer Kupplung. Derartige Kopplungseinrichtungen werden beispielsweise in Kraftfahrzeugen zur Verbindung zwischen einem Verbrennungsmotor und einer Kupplung verwendet. Die Kupplung stellt schaltbar eine Verbindung zu einem Getriebe dar, das seinerseits für den Antrieb der Räder des Kraftfahrzeugs sorgt.

Eine entsprechende Kupplung ist beispielsweise aus der EP 1195537 B1 oder auch aus der EP 1522753 A1 bekannt.

Die bekannten Kupplungen sind beispielsweise als Doppelkupplung ausgestaltet, die ein schnelles Schalten des Getriebes ermöglicht und mittels einer Hydraulik betätigbar ist.

Die Kupplungen weisen oft Torsionsdämpfer in Form von ringförmigen Federeinrichtungen auf, wobei das Drehmoment in Umfangsrichtung mittels der Federelemente zwischen einer Antriebsseite und einer Abtriebsseite übertragen wird. Die Federelemente fangen einerseits Stöße ab und dämpfen andererseits antriebsseitige Vibrationen, welche beispielsweise von dem Verbrennungsmotor herrühren.

Die Ankopplung einer derartigen Kupplung an ein Antriebselement geschieht typischerweise mittels einer ersten, häufig als Flansch bezeichneten Welle, und einer zweiten, diese umgebenden Welle, die formschlüssig derart gekoppelt sind, dass zwischen ihnen eine Drehbewegung übertragbar ist. Die zweite Welle wird dabei ebenfalls oftmals als Flansch bezeichnet. Da die beschriebene Kopplung jedoch gewisse Relativbewegungen zulassen muss und auch montagefreundlich ausgestaltet ist, weist sie ein gewisses Spiel auf, z. B. ein Fügespiel, das beim Betrieb zur Entwicklung von Geräuschen führt.

Aus der US 2013/083136 A1 ist eine Kupplungs-/Kopplungseinrichtung zur Übertragung eines Drehmoments zwischen einem Antriebselement und einer Kupplung mit einer ersten Welle und einer diese umgebenden zweiten Welle bekannt, bei der die beiden Wellen mittels einer in Umfangsrichtung formschlüssigen Verbindung miteinander gekoppelt sind und wobei wenigstens ein elastisches Element zur Erzeugung einer Vorspannung in der formschlüssigen Verbindung vorgesehen ist, wobei die erzeugte Vorspannung in einer Größenordnung ist, die ein Klappern und die entsprechende Geräuschentwicklung bei Laständerung verhindert oder zumindest verringert, wobei durch eine Spiel ein Ausgleich von kleinen Relativbewegungen ermöglicht ist.

Der Erfindung liegt nun die Aufgabe zugrunde, bei einer Kopplungseinrichtung der eingangs genannten Art die Geräuschentwicklung zu verringern oder zu vermeiden und hierfür eine konstruktiv einfache und möglichst aufwandsgünstige Lösung zu finden.

Die Aufgabe wird erfindungsgemäß durch eine Kopplungseinrichtung mit den Merkmalen des Patentanspruchs 1 gelöst. Vorteilhafte Ausgestaltungen sind in den Unteransprüchen angeführt.

Durch wenigstens ein elastisches Element wird eine Vorspannung in der formschlüssigen Verbindung zwischen den beiden Wellen erzeugt, die ein Klappern und die entsprechende Geräuschentwicklung bei Laständerungen verhindert oder zumindest verringert. Dabei wird die Vorspannung in einer Größenordnung gehalten, die die eigentliche Drehmoment- beziehungsweise Kraftübertragung in der formschlüssigen Verbindung nicht behindert und auch die Montage nicht erschwert, jedoch so groß ist, dass das erfindungsgemäße Ziel erreicht wird. Typischerweise werden mittels des wenigstens einen elastischen Elements Vorspannungen im Bereich zwischen 10 Nm und 100 Nm erzeugt. Darüber hinaus sind größere Vorspannungen, insbesondere in Antriebssträngen von Lastfahrzeugen oder von Schwerlastantrieben, denkbar.

In der Kopplungseinrichtung kann beispielsweise durch das Spiel der Ausgleich von kleinen Relativbewegungen zwischen der Kupplung und dem Antriebselement ermöglicht werden. Dies soll durch die erzeugte Vorspannung nicht verhindert werden. Dabei kann die Vorspannung im Bezug auf die erste und die zweite Welle in Umfangsrichtung gerichtet sein, um ein direktes Anliegen entsprechender Flächen der Wellen aneinander zu gewährleisten, so dass Drehbewegungen zumindest in einer Richtung spielfrei übertragen werden können. Die Vorspannung kann aber auch radial gerichtet sein, um hierdurch zumindest Reibungskräfte zu erzeugen, die eine Relativbewegung zwischen der ersten und der zweiten Welle erschweren oder verhindern.

Dabei kann das elastische Element beispielsweise auch durch die erste Welle gebildet sein. Diese kann derart beispielsweise durch Ausnehmungen formelastisch gestaltet sein, dass sie im entspannten Zustand einen größeren Durchmesser aufweist als während der Kopplung mit der zweiten Welle. Sie kann zur Herstellung der formschlüssigen Verbindung radial zusammengedrückt werden und somit eine elastische Vorspannung in radialer Richtung gegenüber der sie umgebenden zweiten Welle entwickeln. Andererseits kann auch die zweite Welle formelastisch ausgebildet sein, beispielsweise durch einen Schlitz, der in der inneren Mantelfläche der zweiten Welle in Axial- und Radialrichtung verläuft und eine Aufweitung der zweiten Welle unter Erzeugung einer elastischen Gegenkraft erlaubt.

Die erste und die zweite Welle oder eine von diesen kann beispielsweise auch wenigstens teilweise aus einem elastischen Material bestehen, um die entsprechenden Kräfte zu erzeugen. Dabei ist ein Material zu wählen, das fest genug ist, um die zu übertragenen Kräfte aufzunehmen. Es kann in diesem Zusammenhang beispielsweise auch ein verformbares Metall als elastisches Material vorgesehen sein.

Die Vorspannung kann auch erfindungsgemäß durch ein Einlageelement erzeugt sein, das zwischen der ersten und der zweiten Welle angeordnet ist. Dieses Einlageelement kann form- oder volumenelastisch ausgebildet sein. Es kann einerseits im Bereich der formschlüssigen Verbindung der beiden Wellen, andererseits jedoch auch in einem Axialbereich vorgesehen sein, in den die formschlüssige Verbindung nicht hineinreicht. Beispielsweise kann das Element als ein O-Ring aus einem Elastomer ausgebildet sein, der zwischen den Wellen angeordnet ist und eine radiale Vorspannung erzeugt.

Die erste Welle kann zur Herstellung einer formschlüssigen Verbindung eine Außenverzahnung tragen, die in eine Innenverzahnung der zweiten Welle eingreift. Eine derartige Verzahnung stellt eine besonders effektive Möglichkeit dar, um hohe Drehmomente beziehungsweise große Leistungen über eine derartige Kopplungseinrichtung zu übertragen. Bei der Montage können in diesem Fall die erste und die zweite Welle axial aufeinander geschoben werden, da sie im Normalfall ein Spiel aufweisen.

Gemäß einer Ausgestaltungsvariante der Erfindung wird zusätzlich ein Einlageelement eingelegt, das beispielsweise auch ein Verzahnungselement der ersten und/oder der zweiten Welle wenigstens teilweise ersetzen kann. Es kann zum Beispiel ein Zahn der Verzahnung, der sich in axialer Richtung der Wellen über einen gewissen Bereich erstreckt, durch ein elastisches Element ganz oder teilweise ersetzt sein. Zu diesem Zweck kann an der Stelle, an der in Umfangsrichtung unter normalen Umständen ein Zahn an der ersten oder zweiten Welle vorgesehen sein müsste, eine Ausnehmung vorgesehen sein, in die das elastische Einlageelement eingebracht werden kann, wobei dieses in der jeweils anderen Welle ebenfalls in eine Ausnehmung eingreift und somit eine Nut-Feder-Verbindung herstellt. Das Einlageelement kann dann als Blattfeder oder allgemein als Federblech ausgebildet sein und eine entsprechende Form aufweisen, die in radialer und/oder tangentialer Richtung der Verzahnung elastisch komprimierbar ist. Das Einlageelement kann jedoch auch als Elastomerkörper oder als Federstift ausgebildet sein, der komprimierbar ist.

In dem Falle von Federblechen , die in den Verzahnungszwischenraum eingebracht werden, können diese sinnvoll am Umfang der Verzahnung symmetrisch verteilt werden, um Unwuchten zu begrenzen und die übertragenen Kräfte optimal zu verteilen. Für eine Vereinfachung der Montage und der Stabilität der Anordnung kann es sinnvoll sein, mehrere Federbleche an einem Ring zu befestigen, so dass sie mittels des Rings in die Verzahnung einschiebbar oder besser noch vor dem Zusammenstecken der Verzahnung mit einer der Verzahnungen, entweder der Außen- oder der Innenverzahnung verbunden werden können. Die Federbleche können dann entweder an in Umfangrichtung gleichsinnig gerichteten Zahnflanken anliegen oder auch teilweise an entgegengesetzt gerichteten Flanken. Im letzteren Fall kann die Federblechanordnung sich mitsamt dem Ring selbsttätig zentrieren, im ersten Fall kann es vorteilhaft sei, den Ring in Umfangsrichtung derart vorzuspannen, dass die Federbleche gegen die entsprechenden Flanken gedrückt werden.

Die einzelnen Federbleche sind derart in Axialrichtung der Wellen oder in Radialrichtung gebogen, dass sie an den Zahnflanken anliegen, jedoch elastisch weiter auf diese hin drückbar sind. Das Maß der Biegung hängt von der gewünschten Vorspannung bzw. von dem Drehmoment ab, das im Normalfall klapperfrei zu übertragen ist. Anstelle der Federbleche können grundsätzlich auch andersartige federnde Elemente gewählt werden, beispielsweise materialelastische Elemente.

Jedes Federblech kann an seinem dem Ring in Axialrichtung der Wellen abgewandten Ende jeweils ein Winkelblech tragen, das den jeweiligen Zahn, an dem das Federblech anliegt, zu dessen Stirnseite hin umgreift. Durch diese hakenförmige Gestaltung der Federbleche kann, wenn die Verzahnung nach dem Einbringen der Federbleche gesteckt wird, das Zusammenstecken nicht durch freie Enden der Federbleche behindert werden.

Grundsätzlich ist zu bemerken, dass auch bei einer anderen Art einer formschlüssigen Verbindung zweier Wellen mehrere elastische Elemente zur Einfügung zwischen die Elemente der Verbindung räumlich verteilt an einem gemeinsamen Tragelement befestigt sein können, um die Anordnung zu stabilisieren und einfach montierbar zu machen.

Die Kopplungseinrichtung ist auf der Seite des Antriebselements mit diesem entweder über eine Taumelscheibe und/oder über eine Schwungscheibe oder direkt verbunden. Auf der Abtriebsseite kann die Kopplungseinrichtung mit einem Torsionsdämpfer verbunden sein, der beispielsweise ringförmig koaxial zu der Kupplung angeordnet sein kann.

Die Erfindung wird nachfolgend anhand einer Zeichnung gezeigt und anschließend beschrieben.

### Dabei zeigt

- Figur 1: prinzipiell die Funktion einer Kupplung mit einem Torsionsdämpfer, der mit einer erfindungsgemäßen Kopplungseinrichtung verbunden ist,
- Figur 2: eine Kopplungseinrichtung, die unmittelbar an eine Schwungscheibe eines Antriebselements angekoppelt ist,
- Figur 3: in einer schematischen Darstellung eine Verzahnung zwischen der ersten und der zweiten Welle samt Vorspannelement,
- Figur 4: einen Querschnitt durch die erste und die zweite Welle,
- Figur 5: im Detail die Verzahnung zwischen der ersten und der zweiten Welle, unter Zwischenlage eines Einlageelementes,
- Figur 6: eine ähnliche Darstellung wie Figur 5, wobei das Einlageelement eine andere Gestalt aufweist,
- Figur 7: eine schematische Darstellung der Verzahnung, wobei als Einlageelement ein O-Ring vorgesehen ist,
- Figur 8: eine schematische Darstellung einer Welle mit Außenverzahnung
- Figur 9: eine Kerbverzahnung mit einem Einlageelement
- Figur 10: einen Ring mit daran befestigten Federelementen
- Figur 11a: eine abgerollte Darstellung einer Verzahnung mit Federelementen
- Figur 11b: die Darstellung aus Figur 11a mit von der Verzahnung gelösten Federblechen
- Figur 12: einen Ring wie in Figur 10 mit zusätzlichen Elementen zum Aufbringen einer Vorspannung in Umfangsrichtung
- Figur 13: eine abgerollte Darstellung einer Verzahnung mit Federelementen mit Winkelblechen
- Figur 14: eine Darstellung wie in Figur 13 mit gegensinnig (an gegensinnig ausgerichteten Zahnflanken) angeordneten Federelementen
- Figur 15: eine perspektivische Darstellung der Anordnung aus Figur 14
- Figur 16: eine Querschnitts- Darstellung der Verzahnung mit eingelegtem Ring mit Federblechen.
- Figuren 17 und 18: je eine Kopplung mit einem gesonderten axialen Abschnitt der zweiten, äußeren Welle, der gegenüber dem übrigen Teil der Welle verspannbar ist

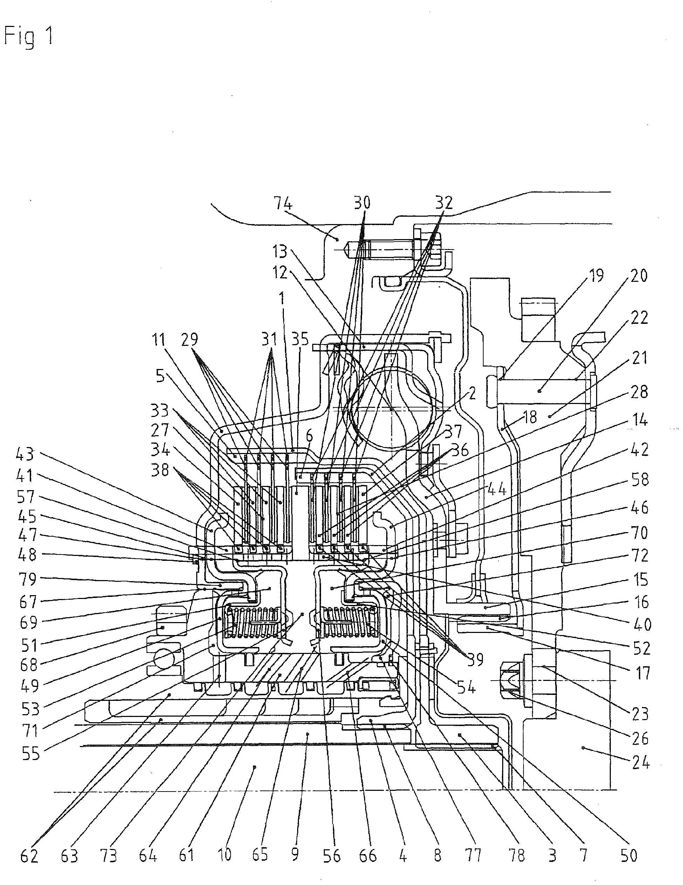

Die Figur 1 verdeutlicht anhand eines Ausschnittes aus einem beispielhaft gewählten Antriebsstrang für ein Kraftfahrzeug einen möglichen Grundaufbau und die Funktionsweise einer erfindungsgemäß gestalteten Doppelkupplung.

Auf der rechten Seite der Zeichnungsfigur ist eine Kurbelwelle 24 angedeutet, welche beispielsweise mit einer Verbrennungskraftmaschine, einem Motor oder dergleichen gekoppelt ist. Diese Seite stellt die Antriebsseite des Antriebsstrangs dar. Auf der linken Seite des Zeichnungsblattes sind zwei Getriebeeingangswellen, nämlich eine Zentral- oder Vollwelle 10 und eine Hohlwelle 9 zu sehen, welche aus der Kupplungsglocke 74 der Doppelkupplung herausgeführt sind und beispielsweise mit einem hier nicht dargestellten Getriebe oder dergleichen gekoppelt sind. Diese Seite stellt die Abtriebsseite des Antriebsstrangs dar.

So kann beispielsweise die erste Getriebeeingangswelle (Zentral- oder Vollwelle 10) zum Betrieb aller ungeraden Gänge (z. B. 1, 3, 5 ...) und die zweite Getriebeeingangswelle (Hohlwelle 9) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 10), als auch der zweiten Getriebeeingangswelle (Vollwelle 9) des Getriebes zugeordnet sein.

Der Antriebsstrang umfasst ferner eine Schwungmasse 21 in Form einer Schwungscheibe, eine biege-/taumelweiche Scheibe 18 (Taumelscheibe), einen Torsionsschwingungsdämpfer 12 sowie die vorstehend genannte Doppelkupplung.

Dieser Antriebsstrang wird von einem äußeren Gehäuse umschlossen. Dieses äußere Gehäuse wird durch die Kupplungsglocke 74 gebildet. Diese Kupplungsglocke 74 umschließt folglich die beiden als nasslaufende Lamellenkupplungen ausgeführten Kupplungen, den Drehschwingungsdämpfer 12, die biege- und/oder taumelweiche Scheibe 18 sowie die Schwungmasse 21.

Der Dreh- oder Torsionsschwingungsdämpfer 12 ist in an sich bekannter Art und Weise ausgebildet. Eingangsseitig weist er ein Primärelement 14 in Form einer Halbschale auf. Ausgangsseitig ist ein Sekundärelement bestehend aus einer ersten Halbschale 13 und einer zweiten Halbschale 11, welche zugleich das Kupplungsgehäuse bildet, vorgesehen. Primärelement 14 und Sekundärelement 13, 11 sind über eine Mehrzahl von an dem Au-ßenumfang des Drehschwingungsdämpfers 12 angeordnete Federpakete in Drehrichtung ein Drehmoment übertragbar gekoppelt. Exemplarisch ist ein Federpaket in der Zeichnung dargestellt.

Die beiden Halbschalen 11 und 14 des Torsionsschwingungsdämpfers 12 umschließen die beiden einzelnen Kupplungen der Doppelkupplung. Sie sind mittels einer Axialverzahnung drehfest gekoppelt und werden beispielsweise durch eine Tellerfeder axial unter Erzeugung eines zusätzlichen Reibschlusses zusammengedrückt.

Jede Kupplung umfasst jeweils einen Außenlamellenträger 1, 2 und einen gemeinsamen Innenlamellenträger 40. Der Außenlamellenträger der ersten Kupplung wird nachfolgend als erster Au-ßenlamellenträger 1, der Außenlamellenträger der zweiten Kupplung wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 weist eine im Wesentlichen zylinderförmige Gestalt auf und erstreckt sich über die axial verlaufenden Bereiche der Halbschalen 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Reiblamellen 29, 30 dienen. Letztere werden üblicherweise auch als Au-ßenlamellen 29, 30 bezeichnet.

In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen aufweisende Reiblamellen, die sogenannten Innenlamellen 36, axial verschieblich aber drehfest geführt sind. Die beiden Innenlamellenträgerabschnitte werden durch eine gemeinsame Endplatte 35 voneinander getrennt.

An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Reiblamellen/Außenlamellen 29, 30, die inneren Reiblamellen/Innenlamellen 33, 36 sowie die beiden Druckplatten 34, 37 und die gemeinsame Endplatte 35 greifen wechselseitig verzahnungsartig in an sich bekannter Weise jeweils ein einer Kupplung zugeordnetes Lamellenpaket 27, 28 bildend ineinander.

Die beiden Lamellenpakete 27, 28 mit den entsprechenden Reiblamellen 29, 30, 33, 34, 35, 36, 37 sind somit auf dem gemeinsamen Innenlamellenträger 40 in axialer Richtung hintereinanderliegend angeordnet. Im vorliegenden Ausführungsbeispiel sind die Reibflächen aller Reiblamellen 29, 30, 33, 34, 35, 36, 37 im Wesentlichen gleich groß, sodass die einzelnen Kupplungen eine gleichwertige Leistungsfähigkeit aufweisen. Selbstverständlich ist es auch möglich, dass die Reibflächen der Reiblamellen verschieden große Durchmesser aufweisen.

Bestandteile der Kupplungen sind ferner nachfolgend im Detail beschriebene Kolben-/Zylindereinheiten, welche zur Betätigung der Kupplungen dienen. Insbesondere ist jeder Kupplung ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Reiblamellen 29, 30, 33, 34, 35, 36, 37 erzeugend und damit die jeweilige Kupplung betätigend gedrückt werden.

Wie sich der Figur 1 entnehmen lässt, werden die beiden Kupplungen nach innen gerichtet betätigt, wobei die Reaktionskräfte gegen die gemeinsame Endplatte 35 wirken.

Der gemeinsame Innenlamellenträger 40 durchsetzt die beiden zur Betätigung der Kupplungen notwendigen ringförmigen Betätigungskolben 43, 44. Zu diesem Zweck weist der Innenlamellenträger jeweils endseitig über dem Außenumfang im Wesentlichen axial verlaufende Stege auf, welche entsprechende Öffnungen 45, 46 der jeweiligen Betätigungskolben 43, 44 verzahnungsartig durchgreifen. Einendseitig durchgreifen diese Stege auch korrespondierend hierzu im Kupplungsgehäuse 11 vorgesehene Öffnungen 47. Die Öffnungen 47 im Kupplungsgehäuse 11 (sowie in der Regel auch die Öffnungen 45, 46 in den Betätigungskolben 43, 44) sind in ihren Umfangsabmessungen so aufeinander abgestimmt, dass eine Relativverdrehung nicht möglich ist. Der Innenlamellenträger 40 ist auf diese Weise drehfest mit dem Kupplungsgehäuse 11 verbunden.

Um eine axiale Verschiebung des Innenlamellenträgers 40 zu verhindern, ist ein Sicherungsring 48 vorgesehen, welcher den Innenlamellenträger 40 am Kupplungsgehäuse 11 fixiert hält.

Das Kupplungsgehäuse 11 ist an einer Nahtstelle 67 starr mit einer Kupplungsnabe 61 verbunden. Diese Kupplungsnabe 61 umgreift die beiden Getriebeeingangswellen 9, 10 koaxial. Die Kupplungsnabe 61 trägt einen halbschalenförmigen Zylinder 77. Dieser Zylinder 77 ist mittels eines Sicherungsrings 78 in seiner Axialverschiebung begrenzt.

Bestandteil des Kupplungsgehäuses 11 ist ein Zylinder 79 in zu dem Zylinder 77 korrespondierender Art. An den beiden Zylindern 77, 79 sind die jeweiligen Betätigungskolben 43, 44 axial verschieblich geführt. Zylinder 77 und Betätigungskolben 44 dienen als Abstützung und Zentrierung für den Innenlamellenträger 40.

Die Betätigungseinrichtungen für die beiden Kupplungen umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 79, 77 und am Außenumfang der Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich mit deren Innenflächen gegen radial nach innen gerichtete umlaufende Umfangsstege 57, 58 am Innenlamellenträger 40 ab.

Obwohl das gesamte Kupplungssystem unmittelbar auf der zweiten Getriebeeingangswelle (Hohlwelle 9) gelagert werden könnte, ist bei der vorliegenden Ausführungsform ein separates flanschartiges Bauteil, nachfolgend als Träger 62 bezeichnet, vorgesehen, welches die beiden Getriebeeingangswellen, die Hohlwelle 9 und die Vollwelle 10, koaxial umgreift und auf welchem die Kupplungsnabe 61 drehbar gelagert ist. Zur Lagerung der Kupplungsnabe 61 auf dem Träger 62 werden vorliegend Gleitlager verwendet. Als Alternative für reduzierte Reibmomente können Wälzlager (Nadellager) verwendet werden.

Der Träger 62 kann einteilig oder sowohl axial als auch radial mehrteilig ausgeführt sein. Im vorliegenden Fall ist der Träger 62 zweiteilig ausgeführt. Er besteht aus einem Mantel und einer von diesem umschlossenen Buchse. Die zylindermantelförmige Buchse weist in deren Außenumfang in axialer Richtung verlaufende, unterschiedlich lange Längsnuten auf. Der Mantel weist korrespondierend zur Anordnung der vorerwähnten Längsnuten vier in Umfangsrichtung verlaufende Nuten auf. Diese Umfangsnuten sind über radial verlaufende hier nicht dargestellte Öffnungen mit den entsprechenden Längsnuten verbunden.

Korrespondierend zu den Umfangsnuten weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über diese Hydraulikflüssigkeitskanäle 63, 64, 65, 66 erfolgt eine Versorgung der durch die Kolben 43, 44, 49, 50, 55, 56 gebildeten Volumina (erster Hydraulikflüssigkeitsbetätigungsraum 71, zweiter Hydraulikflüssigkeitsbetätigungsraum 72, erster Hydraulikflüssigkeitsausgleichsraum 69, zweiter Hydraulikflüssigkeitsausgleichsraum 70, Kühlflüssigkeitsraum 73) mit Hydraulikflüssigkeit.

Über den ersten Hydraulikflüssigkeitskanal 63 kann der erste Hydraulikflüssigkeitsbetätigungsraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung diese betätigend gedrückt wird.

In gleicher Weise kann über den vierten Hydraulikflüssigkeitskanal 66 der zweite Hydraulikflüssigkeitsbetätigungsraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung diese betätigend gedrückt wird.

Über die beiden Hydraulikflüssigkeitskanäle 64 und 65 werden einerseits die Hydraulikflüssigkeitsausgleichsräume 69, 70 als auch der Kühlflüssigkeitsraum 73 mit Hydraulikflüssigkeit befüllt.

Die Hydraulikflüssigkeit in den Hydraulikflüssigkeitsausgleichsräumen 69, 70 dient dazu, einen fliehkraftbedingten Hydraulikflüssigkeitsgegendruck zu erzeugen, welcher der fliehkraftbedingten Druckzunahme im jeweiligen Hydraulikflüssigkeitsbetätigungsraum 71, 72 entgegen wirkt.

Die Hydraulikflüssigkeit im Kühlflüssigkeitsraum 73 wird zur Kühlung der Reiblamellen 29 30 33, 34, 35, 36, 37 durch radial verlaufende (hier nicht dargestellte) Öffnungen im Innenlamellenträger 40 zu den Reiblamellen 29, 30, 33, 34, 35, 36, 37 geführt.

Die vorstehend im Detail beschriebenen Komponenten des Antriebsstranges sind wie folgt miteinander verbunden. Die Kurbelwelle 24 ist mit dem Innenumfang der Schwungmasse 21 verschraubt (Schraube 26, Bohrung 23). Der Außenumfang der Schwungmasse 21 ist mit dem Außenumfang der biege-/taumelweichen Scheibe 18 vernietet (Außenrandbohrung 19, Niete 20, Bohrung 22). Der Innenumfang der biege-/taumelweichen Scheibe 18 trägt eine, auch als Innenflansch bezeichnete erste Welle 17 mit einer Außenverzahnung. Diese Außenverzahnung greift in der Art einer Steckverzahnung 16 in eine Innenverzahnung der zweiten Welle 15, die mit dem Primärelement 14 des Torsionsschwingungsdämpfers 12 verbunden ist und daher teilweise auch als Primärflansch bezeichnet wird.

Das Sekundärelement 13 des Torsionsschwingungsdämpfers 12, welches zugleich das Kupplungsgehäuse bildet, ist in vorstehend beschriebener Weise drehfest mit dem Innenlamellenträger 40 der Doppelkupplung verbunden.

Die beiden Kupplungen (Lamellenpakete 27, 28; Betätigungskolben 44, 45) verbinden den Innenlamellenträger 40 schaltbar mit den Außenlamellenträgern 1, 2, welche wiederum über deren Flansche 3, 4 mittels Steckverzahnung 7, 8 drehfest mit den beiden Getriebeeingangswellen 9, 10 verbunden sind.

Ein über die Kurbelwelle 24 eingeleitetes Drehmoment kann also mittels der Doppelkupplung auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

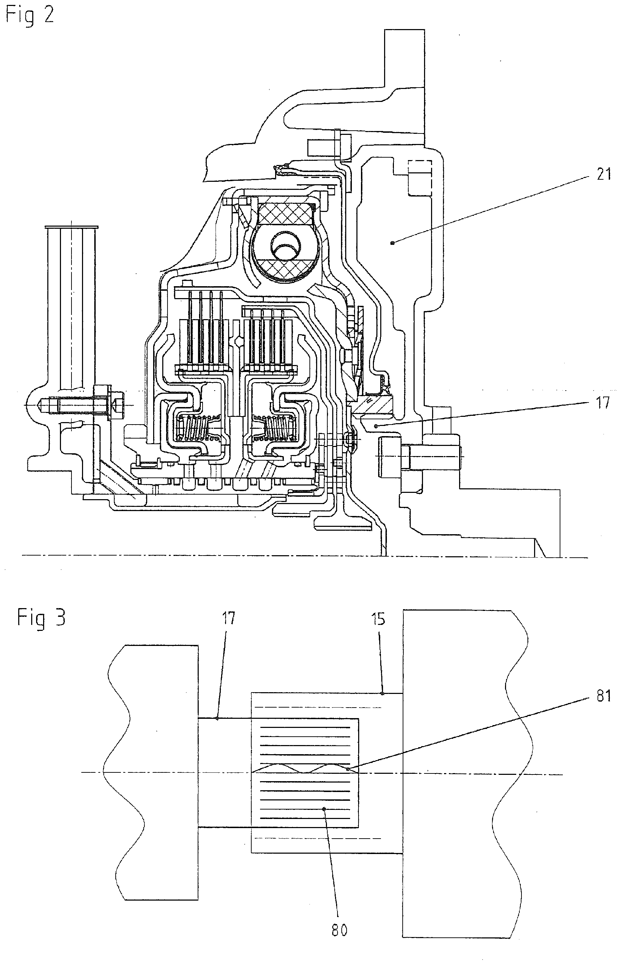

Figur 2 zeigt eine Kopplungseinrichtung ähnlich der in Figur 1 dargestellten, wobei jedoch gegenüber der in Figur 1 gezeigten Konstruktion die erste Welle nicht mit der taumelweichen Scheibe 18 sondern unmittelbar mit der Schwungmasse 21 verbunden ist. Eine taumelnde Scheibe ist in dieser Konstruktion nicht vorgesehen.

Figur 3 zeigt in einer vergrößerten Ausschnittsdarstellung schematisch die erste Welle 17 und die zweite Welle 15. Die erste Welle 17 trägt eine Außenverzahnung 80, die in eine nicht näher dargestellte Innenverzahnung der zweiten Welle 15 eingreift. Schematisch ist eine Blattfeder 81 aus Federstahl dargestellt, die in die Verzahnung eingelegt ist und die derart doppel-S-förmig gebogen ist, dass sie eine Vorspannung in Umfangsrichtung zwischen die Innenverzahnung und Außenverzahnung einbringt.

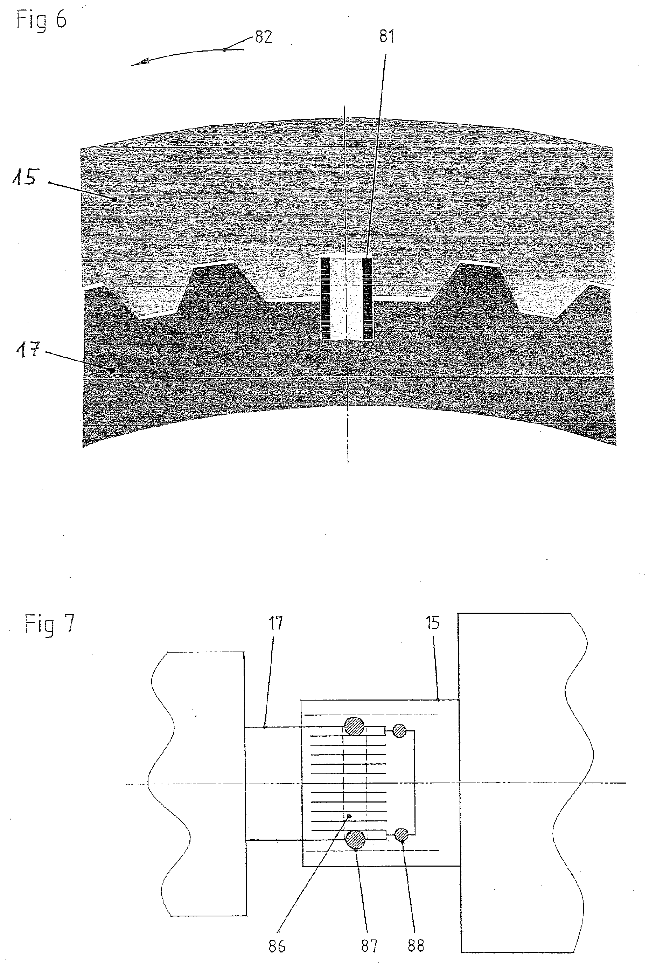

Die Blattfeder 81 kann beim axialen Zusammenschieben der ersten und der zweiten Welle mit eingeschoben werden und weist eine derartige Vorspannung auf, dass die beiden Wellen unter Aufgabe des Spiels in Umfangsrichtung zusammengedrückt werden. In der Figur 6 ist diese Anordnung in einem Querschnitt gezeigt, wobei eine Nut in der ersten Welle 17 in axialer Richtung verlaufend zwischen zwei Zähnen der Verzahnung angeordnet ist sowie eine parallel zu dieser verlaufende weitere Nut in der inneren Mantelfläche der ersten Welle 15. Die Blattfeder 81 greift in beide Nuten ein und richtet diese zueinander derart aus, dass eine Relativbewegung im Umfangsrichtung, die mit dem Pfeil 82 angedeutet ist, zu einer weiteren Verformung der Blattfeder führen würde, wodurch elastische Rückstellkräfte entstehen. Somit werden die beiden Wellen derart miteinander verbunden, dass sie bis zum Übersteigen einer bestimmten in Umfangsrichtung wirkenden Kraft fest zueinander positioniert sind. Wird diese Kraft überschritten, so wird die Blattfeder verformt und die beiden Wellen können sich soweit gegeneinander verdrehen, dass die Verzahnungen in der einen oder anderen Drehrichtung aneinander anliegen.

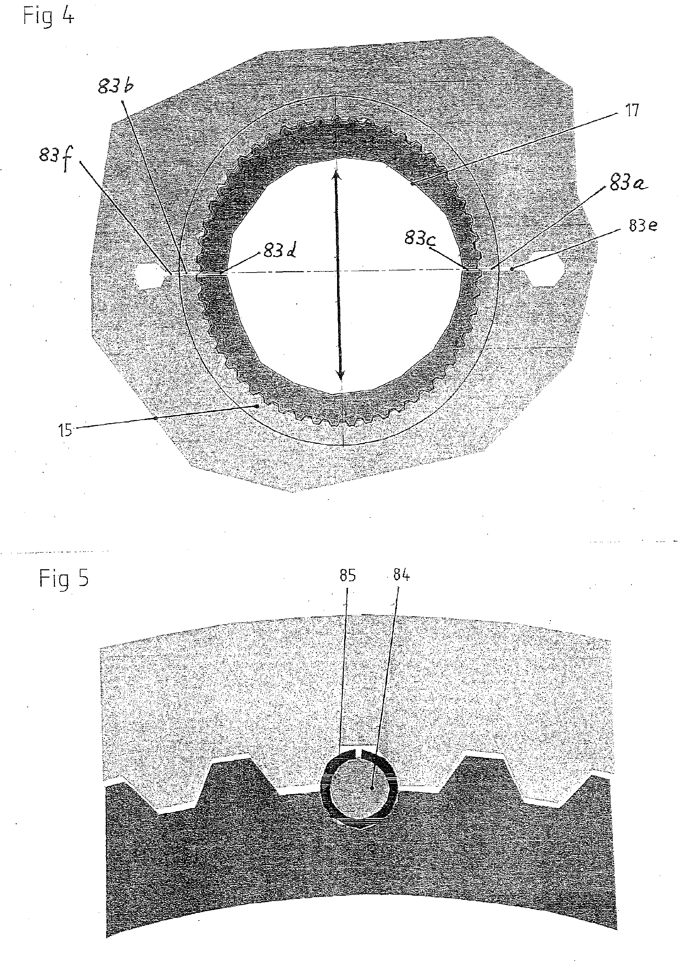

Die Figur 4 zeigt eine Ausführungsform der Erfindung, bei der die zweite Welle 15 dadurch elastisch ausgebildet ist, dass in ihr ein Paar diametral gegenüberliegender in radialer und axialer Richtung verlaufender Schlitze 83a, 83b vorgesehen ist. Dieses Schlitzpaar 83a, 83b erlaubt eine radiale Aufweitung der zweiten Welle 15, so dass die erste Welle 17, auch wenn ihre Außenmaße ein wenig über den Innenmaßen der zweiten Welle liegen, in diese unter elastischer Aufweitung der zweiten Welle 15 eingeschoben werden kann. Dadurch liegt eine radiale Pressung vor, die zum Ausgleich des vorhandenen Spiels in radialer Richtung führt, so dass ein Klappern der Wellen gegeneinander verhindert wird. In Umfangsrichtung ergeben sich Reibungskräfte, die nur im Falle einer Laständerung eines bestimmten Ausmaßes überwunden werden. Jedenfalls wird die Übertragung des Drehmoments durch die Elastizität der zweiten Welle nicht beeinträchtigt. In der Figur 4 ist dargestellt, dass auch die erste, innenliegende, Welle 17 ein entsprechendes Paar von Schlitzen 83c, 83d aufweist. Dies ist nicht notwendigerweise der Fall, es können jedoch beide Wellen 15, 17 oder auch nur eine, die äußere 15 oder die innere 17 Welle, ein derartiges Schlitzpaar aufweisen, um eine radiale Aufweitung beziehungsweise eine radiale Zusammenstauchung zu erlauben.

Zur elastischen Ausbildung der ersten und/oder zweiten Welle können weitere Schlitzpaare vorgesehen sein, vorzugsweise wiederum diametral gegenüberliegende Schlitzpaare. Ergänzend oder alternativ können zusätzlich einzelne Schlitze vorgesehen sein, die nicht mit einem zweiten Schlitz ein Paar von Schlitzen bilden. Jeder Schlitz kann sich überdies in axialer Richtung über einen Teil oder die gesamte Länge der jeweiligen Welle erstrecken.

In einer bevorzugten Ausgestaltungsvariante der Erfindung sind vier bis sechs Paare aus diametral gegenüberliegenden Schlitzen vorgesehen. Hierbei kann sich wiederum jeder Schlitz in axialer Richtung über einen Teil oder die gesamte Länge der jeweiligen Welle erstrecken.

Wie in Figur 4 dargestellt, ist wenigstens ein Paar von Schlitzen 83e, 83f in dem mit der inneren Welle 17 verbundenen Bauteil, hier der Taumelscheibe 18, vorgesehen. In einer anderen Ausgestaltungsvariante, z.B. der gemäß der Figur 2, kann das Schlitzpaar 83e, 83f in der Schwungmasse 21 vorgesehen sein. Vorzugsweise ist das wenigstens eine Schlitzpaar 83e, 83f in diesem Bauteil kolinear mit einem Schlitzpaar 83a,83b; 83c, 83d in der äußeren 15 oder der inneren 17 Welle angeordnet.

Die beschriebenen Maßnahmen zur Ausbildung wenigstens einer elastischen Welle können alternativ oder auch gleichzeitig mit dem Einfügen eines Einlageelementes in die Verzahnung vorgesehen sein.

Figur 5 zeigt eine weitere alternative Ausgestaltung der Erfindung, dergestalt, dass in die Verzahnung anstelle eines Zahns ein Federstift 84 eingefügt ist, der in axialer Richtung der Wellen verläuft und der aus einem längs geschlitzten Federzylinder 85 aus einem Federblech besteht, der vorzugsweise mit einem kompressiblen Medium oder einem Elastomerkörper gefüllt ist. Der Federstift ist radial zusammendrückbar, so dass er als elastisches Element in zwei Nuten eingelegt werden kann, die, einander gegenüberliegend, axial in der äußeren Mantelfläche der innenliegenden ersten Welle und in der innenliegenden Mantelfläche der außenliegenden zweiten Welle verlaufen. In diesem Fall kann durch den Federstift je nach der Tiefe der Nuten eine radiale und/oder azimutale Vorspannung zwischen der ersten und der zweiten Welle erzeugt werden, so dass diese in jedem Fall wenigstens auf der dem Federstift gegenüberliegenden Seite der Verzahnung fest aneinander anliegen, wodurch der gewünschte Reibschluss erzeugt wird.

Figur 7 zeigt eine schematische Darstellung der ersten und zweiten Welle mit der Verzahnung, wobei in einem ersten Beispiel im axial begrenzten Abschnitt 86 in den einzelnen Zähnen der Außenverzahnung Ausnehmungen vorgesehen sind, in die ein O-Ring 87 eingelegt ist, der die innere Welle vollständig umgibt und der einen derartigen Durchmesser aufweist, dass er zwischen der ersten und der zweiten Welle komprimiert ist und somit eine radiale Vorspannung zwischen den Wellen erzeugt. Der O-Ring 87 besteht typischerweise aus einem Elastomer, das einen hohen Reibungskoeffizient aufweist, so dass die Reibungskräfte zwischen den beiden Wellen relativ groß sind.

Ein zweites Beispiel ist zusätzlich in derselben Figur dargestellt, in Form des O-Rings 88, der alternativ oder gleichzeitig zu dem O-Ring 87 vorgesehen sein kann und der in einem Abschnitt der ersten Welle 17 angeordnet ist, der keine Verzahnung trägt sondern eine glatte zylindrische Oberfläche aufweist, in die lediglich eine Nut zur Aufnahme des O-Rings 88 eingebracht ist.

Auf der Gegenseite kann an der inneren Mantelfläche der zweiten Welle 15 ebenfalls eine Nut vorgesehen sein kann, in die der O-Ring 88 derart eingreift, dass er radial wenigstens ein Stück weit komprimiert ist und somit eine radiale Vorspannung zwischen den Wellen erzeugt.

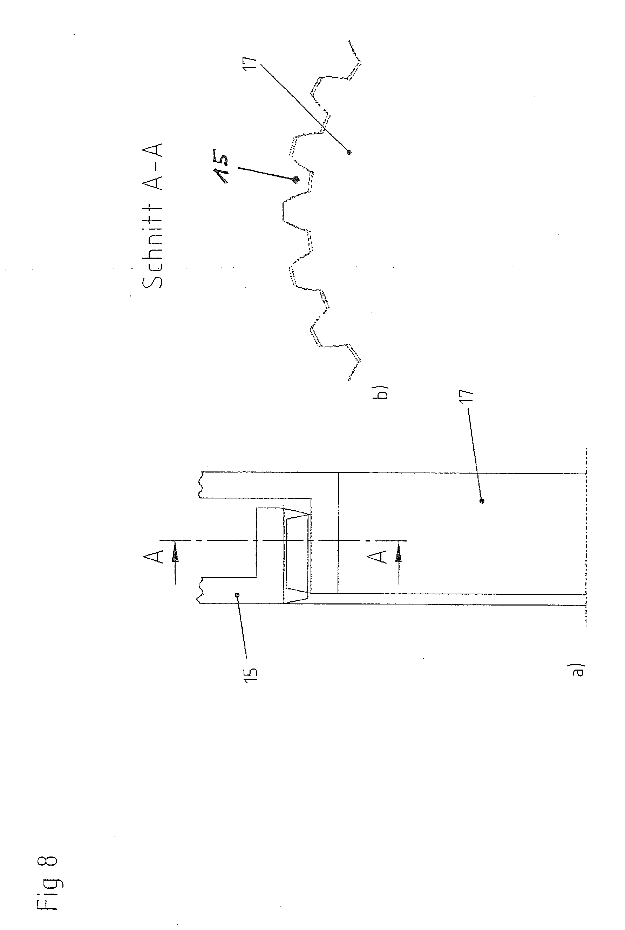

Die Figuren 8 bis 16 zeigen eine spezielle, besonders optimierte Ausgestaltung der Erfindung , bei der Federelemente an einem gemeinsamen Ring derart befestigt sind, dass sie gemeinsam in eine Verzahnung eingebracht werden können, um zwischen den Zähnen einer Innenverzahnung und einer Außenverzahnung das vorhandene Spiel elastisch aufzunehmen.

Figur 8 zeigt dabei im Teil b) eine Außenverzahnung in einem Schnitt A-A, der im Teil a) der Figur angedeutet ist. Ohne weitere Maßnahmen führt ein Spiel zwischen der Innen- und der Außenverzahnung zur Entwicklung von Klappergeräuschen insbesondere bei niedrigen Drehzahlen. Solche Geräusche sollen mithilfe der Erfindung vermieden oder verringert werden. Die erste Welle ist, wie auch in den übrigen Figuren, wieder mit dem Bezugszeichen 17, die zweite Welle mit 15 bezeichnet.

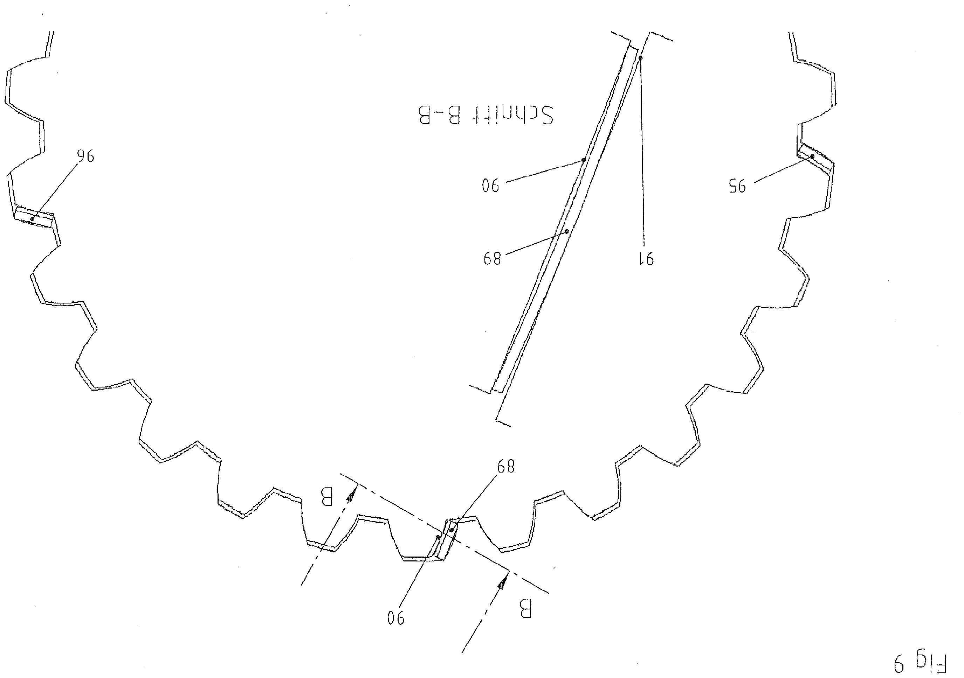

Figur 9 zeigt beispielhaft die Einfügung eines Federblechs 89 zwischen einen Zahn 90 einer Außenverzahnung und einen Zahn 91 einer Innenverzahnung. Im Schnitt B-B wird deutlich, dass das Federblech 89 bogenförmig in der Mitte der Zahnflanke des Zahns 90 von diesem beabstandet ist und elastisch an die Flanke andrückbar ist. Prinzipiell ist es jedoch gleichwertig, ob die konvexe Fläche des Federblechs gegen die Außen- oder gegen die Innenverzahnung anliegt.

Zusätzlich sind weitere Federbleche 95, 96 am Umfang der Verzahnung gleichmäßig verteilt dargestellt.

Um die Federbleche problemlos unterbringen zu können, kann jeweils ein Zahn der Außenverzahnung schmaler gestaltet sein oder ein entsprechender Zahn der Innenverzahnung oder der zu schaffende Freiraum kann auf beide Verzahnungen aufgeteilt werden. Bei der Innenverzahnung ist diese Maßnahme jedoch besonders einfach durchzuführen.

Die Wahl der Anzahl der Federelemente, die vorgesehen werden, hängt unter anderem auch von dem zu übertragenden Drehmoment, bis zu dem die Klappergeräusche unterdrückt werden sollen, ab. Jedoch werden die Bleche, um Unwuchten zu vermeiden, vorteilhaft symmetrisch am Umfang angeordnet.

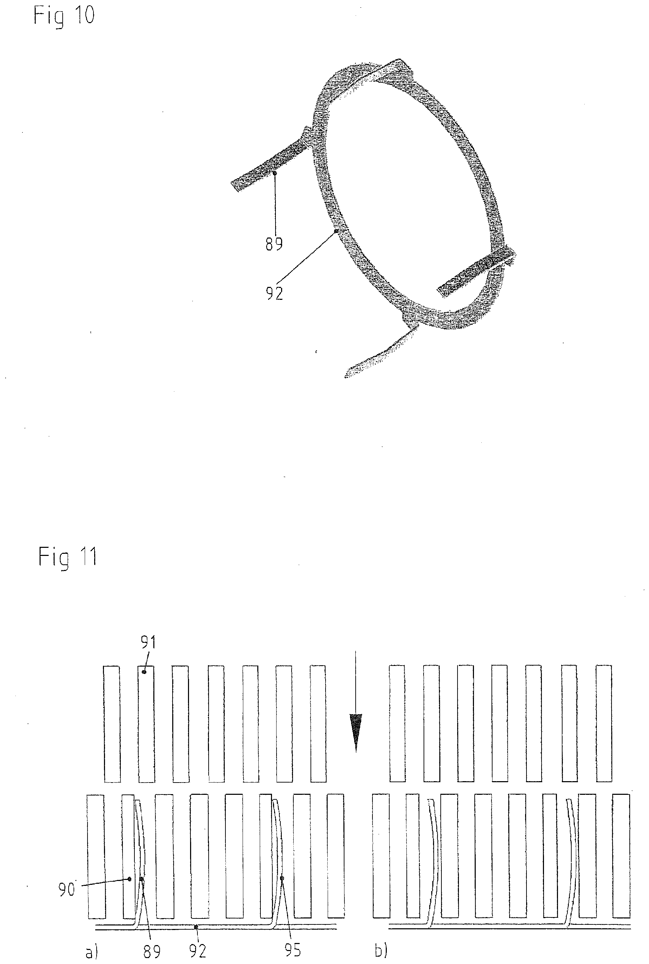

Figur 10 zeigt in einer perspektivischen Ansicht eine Anordnung von 4 Federblechen, die an einem gemeinsamen Ring 92 befestigt und dadurch fest zueinander positioniert sind. Mittels des Rings 92 sind die Federbleche gemeinsam in die Verzahnung einschiebbar und dort festlegbar.

Die Figuren 11a und 11b zeigen abgerollte Darstellungen der Innen- und der Außenverzahnung vor dem Einsteckvorgang. Im unteren Teil dieser Figuren ist jeweils die Innenverzahnung mit dem Zahn 90 und dem eingefügten Federblech 89 aus Figur 9 dargestellt, ebenso wie das Federblech 95. Insgesamt liegen in Figur 11a alle Federbleche an in Umfangsrichtung gleichsinnig ausgerichteten Flanken der Innenverzahnung an. Dies führt dazu, dass der Ring 92 leicht in Umfangsrichtung verdreht werden kann, wodurch die Federbleche sich, wie im Fall der Figur 11b dargestellt, von der Verzahnung lösen können. Beim Zusammenstecken der Verzahnung ergibt sich hierdurch ein Problem, das dazu führt, dass entweder das Stecken verhindert oder behindert oder das Federblech entfernt oder zerstört wird.

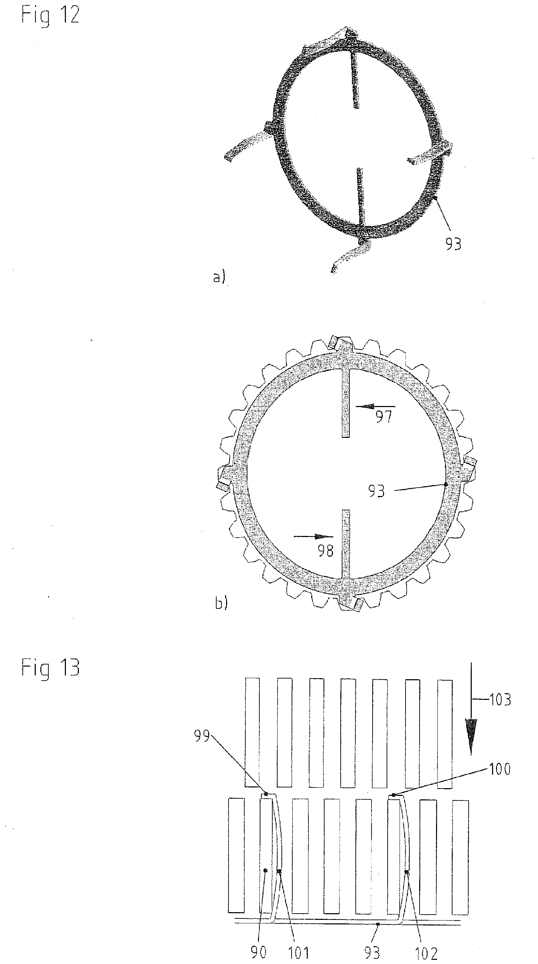

Dieses Problem lässt sich beispielsweise, wie in Figur 12 dargestellt, durch eine azimutale Vorspannung des Rings 93 in Richtung der Pfeile 97, 98 lösen. Der Ring 93 weist zu diesem Zweck radiale Speichen auf, die gegenüber der ersten Welle 17, die das Außengewinde trägt, verspannt werden können. Die Speichen selbst können dabei als Federn dienen, die sich an Widerlagern an der ersten Welle abstützen.

Figur 13 zeigt eine andere Maßnahme zur Sicherstellung einer problemlosen Montage der Anordnung in Form von Winkelblechen 99, 100, die an der von dem Ring 93 abgewandten Seite der Federbleche 101, 102 befestigt sind und je einen Zahn der Innenverzahnung stirnseitig wenigstens teilweise umgreifen. Auf diese Weise sind die hakenförmigen Enden der Federbleche an der Innenverzahnung abgestützt. Hierdurch werden die Federbleche bei dem durch den Pfeil 103 in Figur 13 angedeuteten Montagevorgang auch bei schlechter Positionierung der Verzahnungen zueinander nicht verbogen.

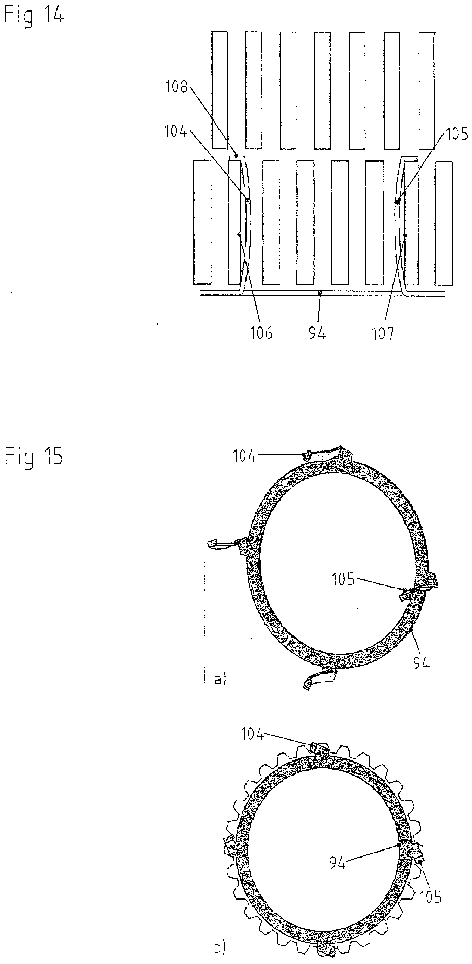

Eine eigenständige Vorspannung des Rings in Umfangsrichtung wird vollends entbehrlich durch die in der Figur 14 dargestellte Maßnahme, dass mehrere der Federbleche 104, 105 an in Umfangsrichtung gegensinnig ausgerichteten Flanken 106, 107 der Innenverzahnung anliegen. Die einzelnen Federbleche können damit in Umfangsrichtung gegeneinander verspannt sein, wodurch der Ring 94 selbsttätig zentriert wird.

Die Figur 15 zeigt diese Ausgestaltung in Teil a perspektivisch, in Teil b in einer Draufsicht auf die Innenverzahnung mit dem Ring 94.

Vorteilhaft erscheint es, zwei Paare, noch vorteilhafter, drei Paare von gegensinnigen Federblechen bei einer derartigen Konstruktion vorzusehen.

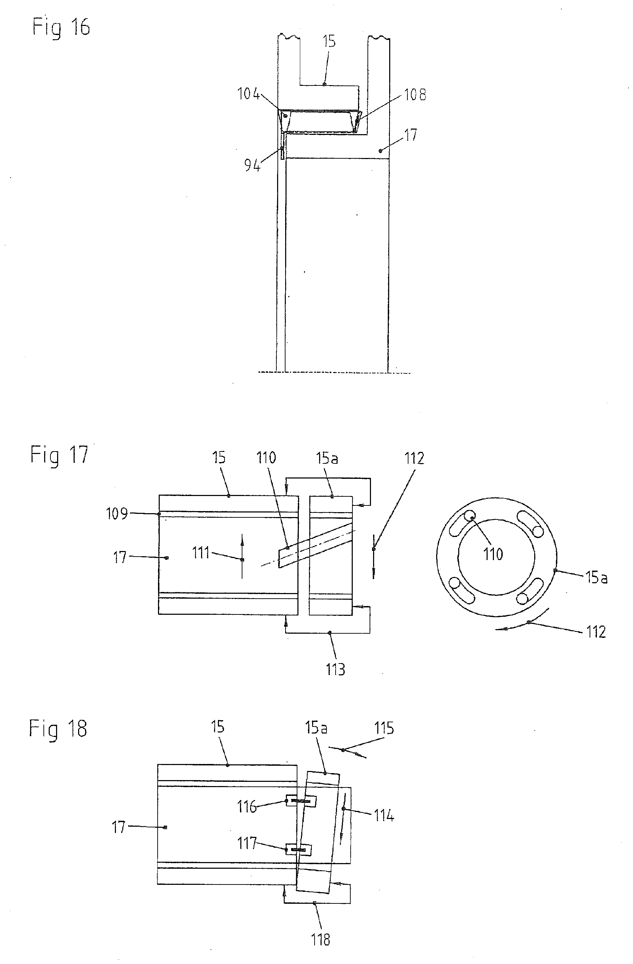

Figur 16 zeigt schließlich einen Schnitt durch eine gesteckte Verzahnung, wobei die Außenverzahnung auf der ersten Welle 17, die Innenverzahnung auf der zweiten Welle 15 angeordnet ist. Es ist ein Federblech 104 dargestellt, das auf der linken Seite durch den Ring 94, auf der rechten Seite durch das Winkelblech 108 gesichert ist.

Damit ist die größtmögliche Sicherheit mit einer vereinfachten Montage bei geringem konstruktiven Aufwand verbunden.

Der Vollständigkeit halber sei erwähnt, dass die Erfindung ebenso wie oben beschrieben, in analoger Weise durch an der Au-ßenverzahnung angeordnete und verklemmte Federbleche verwirklicht werden kann.

Die Erfindung kann bei einer Kopplungseinrichtung zur Übertragung eines Drehmoments zwischen einem Antriebselement und einer Kupplung mit einer ersten Welle 17 und einer diese umgebenden zweiten Welle 15 auch auf noch eine weitere Art umgesetzt werden. Dabei ist vorausgesetzt dass die beiden Wellen mittels einer in Umfangsrichtung formschlüssigen Verbindung mit Spiel, insbesondere eine Verzahnung, miteinander gekoppelt sind. Die genannte weitere Umsetzung der Erfindung sieht vor, dass wenigstens eine der Wellen auf wenigstens einem Teil ihres Umfangs einen axial abgeteilten und gegenüber dem übrigen Teil bewegbaren gesonderten Abschnitt aufweist, der auch einen Teil der formschlüssigen Verbindung aufweist und der in axialer und/oder radialer und/oder azimutaler Richtung und /oder durch eine Taumelbewegung gegenüber dem übrigen Teil der jeweiligen Welle elastisch verspannbar ist.

Unter einer Taumelbewegung soll dabei eine Verdrehung um eine senkrecht zu den Längsachsen der Wellen gerichtete Achse verstanden werden.

Dabei ist vorteilhaft die elastische Verspannung durch federelastische Elemente, wie beispielsweise Elastomerelemente oder metallische Federn realisiert, die an dem gesonderten Abschnitt einerseits und an dem übrigen Teil der jeweiligen Welle andererseits angreifen.

Der gesonderte Abschnitt kann in konstruktiv einfacher Weise ein zylindrischer Teilabschnitt einer Welle sein, der durch Teilung der Welle in Axialrichtung entsteht. Besonders vorteilhaft ist dabei, wenn es sich um einen gesonderten Abschnitt der Außenwelle handelt, der einen Teil der Innenverzahnung aufweist, welche in die Außenverzahnung der inneren Welle eingreift. Eine geringfügige Verschiebung, Verdrehung oder Verkippung des gesonderten Abschnittes in der beschriebenen Weise führt notwendiger Weise zum Anliegen an der Verzahnung der jeweils anderen Welle und somit zu einer Aufhebung des mechanischen Spiels.

Die Größe der aufgebrachten elastischen Kräfte bei der Verspannung hängen davon ab, bis zu welchen zu übertragenden Kräften die Kopplung spielfrei sein soll.

Beispiele einer solchen Kopplung sind in den Figuren 17 und 18 dargestellt.

Gemäß Figur 17 ist eine durchgehende erste Welle 17, die innere Welle vorgesehen, die ein Außengewinde trägt sowie eine äu-ßere, zweite Welle 15, 15 a, die in axialer Richtung in zwei Teile, nämlich den gesonderten Abschnitt 15 a und den übrigen Teil der zweiten Welle geteilt ist. Der Bereich der ineinandergreifenden Verzahnung ist mit 109 bezeichnet. Sowohl der gesonderte Abschnitt als auch der übrige Teil der zweiten Welle weisen Ausnehmungen zur Befestigung von am Umfang verteilten Federn 110 auf, die schräg zur Mittelachse der Wellen verlaufen und beim Spannen für eine Verdrehung des gesonderten Abschnitts gegenüber dem übrigen Teil der zweiten Welle um die Längsachse der Welle führen. Der Richtungssinn der Verdrehung ist mittels der Pfeile 111 und 112 angedeutet. Durch die Verdrehung der genannten Teile gegeneinander liegt in jedem Fall wenigstens ein Zahn entweder des gesonderten Abschnitts oder des übrigen Teils der zweiten Welle 115, 115a an der Außenverzahnung der ersten Welle 17 an.

Zusätzlich kann durch die Spannung der Federn, von denen nur eine mit 110 bezeichnet ist, und die als Schraubenfedern aus einem Federstahl ausgeführt sein können oder auch durch andere, zusätzliche Federelemente (die symbolisch in der Figur als Klammer 113 bezeichnet sind) eine axiale Kompression auf die beiden Teile 15, 15a ausgeübt werden, um die Verdrehung durch Haftreibungskräfte zu stabilisieren.

Die Figur 18 zeigt eine Variante, bei der der gesonderte Abschnitt 15a einerseits in Richtung des Pfeils 114 im wesentlichen senkrecht zu der Längsachse der Wellen 15, 17 versetzt ist und bei der der gesonderte Abschnitt 15a zusätzlich gegenüber dem übrigen Teil der zweiten Welle um einen kleinen Winkel in Richtung des Pfeiles 115 verkippt ist.

Jede einzelne der Maßnahmen- der Versatz und die Verkippung - für sich allein kann schon zur Erreichung des erfindungsgemäßen Zieles ausreichen, nämlich zu einer Anlage an der jeweils gegenüberliegenden Außenverzahnung der inneren, ersten Welle 17 führen. In der jeweils eingenommenen Position wird der gesonderte Abschnitt mit Hilfe der Federelemente 116, 117 gehalten, die beispielsweise als Gummistifte ausgebildet sein können.

Zusätzlich kann noch ein Federelement 118 vorgesehen sein, das die Teile 15, 15 a zusammendrückt und dadurch eine Haftreibungskraft erzeugt, die den Versatz und damit die elastische Passung der Gesamtkonstellation stabilisiert. Die Gesamtkonstellation ist derart, dass die Innenverzahnung wenigstens im Bereich eines Zahnes fest an der Außenverzahnung elastisch anliegt.

Das Maß der Verschiebung, Verdrehung bzw. Verkippung des gesonderten Abschnittes ist in den Figuren der Deutlichkeit halber gut erkennbar ohne Rücksicht auf den tatsächlichen Betrag der Positionsänderung dargestellt, die größer oder auch kleiner als dargestellt sein kann.

Die beschriebenen Ausführungsformen der Erfindung sorgen dafür, dass nicht bei Laständerungen, die beispielsweise bei Verbrennungsmotoren in Kraftfahrzeugen leicht auftreten können, ein Klappern zwischen der ersten und der zweiten Welle durch Spiel in der Verzahnung auftritt. Es versteht sich von selbst, dass die genannten Maßnahmen einzeln für sich oder auch kombiniert miteinander angewendet werden können.

In einer vorteilhaften Ausgestaltungsvariante sind daher wenigstens zwei elastische Elemente vorgesehen, die gestuft ihre Wirkung entfalten. So kann beispielsweise als erstes elastisches Element für eine erste Stufe ein oder mehrere elastische Einlageelemente vorgesehen sein, welche bei zu übertragenden Drehmomenten in einem ersten Drehmomentbereich, vorzugsweise einem Bereich von 10 Nm bis 30 Nm, sein bzw. ihre Wirkung entfalten. Ab einem Grenzdrehmoment, das vorzugsweise etwa in einem Bereich zwischen 30 Nm und 60 Nm liegt, entfaltet zumindest ein zweites elastisches Element für die zweite Stufe seine Wirkung. Hierbei kann es sich beispielsweise um an einem gemeinsamen Ring befestigte Federbleche handeln.

Dieses zumindest eine zweite elastische Element kann alternativ oder zusätzlich zu dem wenigstens einen ersten elastischen Element der ersten Stufe wirken. Geht das wenigstens eine erste elastische Element beispielsweise ab einem gewissen Drehmoment auf Block, wirkt von diesem Drehmoment an nur noch das zweite elastische Element für die zweite Stufe. Besitzt hingegen das wenigstens eine erste elastische Element für die erste Stufe oberhalb des Grenzdrehmoments eine Restelastizität wirken die elastischen Elemente für beide Stufen oberhalb des Grenzdrehmoments.

Durch entsprechende Kombination von elastischen Elementen können offensichtlich mehr als die beschriebenen zwei Stufen ausgebildet werden. Grundsätzlich können beliebig viele solcher Stufen vorgesehen werden, bevorzugt werden jedoch zwei oder drei Stufen ausgebildet.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Vollwelle
- 11: Kupplungsgehäuse
- 12: Torsionsschwingungsdämpfer
- 13: Sekundärelement
- 14: Primärelement
- 15: Primärflansch/ zweite Welle
- 15a: gesonderter Abschnitt der zweiten Welle
- 16: Steckverzahnung
- 17: Innenflansch/ erste Welle
- 18: biege-/taumelweiche Scheibe
- 19: Außenrandbohrung
- 20: Niete
- 21: Schwungmasse
- 22: Bohrung
- 23: Bohrung
- 24: Kurbelwelle
- 25: Gewindebohrung
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: Endplatte
- 36: Innenlamelle
- 37: Druckplatte
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Öffnung
- 46: Öffnung
- 47: Öffnung
- 48: Sicherungsring
- 49: Druckkolben
- 50: Druckkolben
- 51: Kolben
- 52: Kolben
- 53: Schraubenfeder
- 53a: Schraubenfeder
- 54: Schraubenfeder
- 55: Kompensationskolben
- 56: Kompensationskolben
- 57: Umfangssteg
- 58: Umfangssteg
- 59: Ringelement
- 60: Sicherungsring
- 61: Kupplungsnabe
- 62: Träger
- 63: Hydraulikflüssigkeitskanal
- 64: Hydraulikflüssigkeitskanal
- 65: Hydraulikflüssigkeitskanal
- 66: Hydraulikflüssigkeitskanal
- 67: Nahtstelle
- 68: Pumpenantriebszahnrad
- 69: erster Hydraulikflüssigkeitsausgleichsraum
- 70: zweiter Hydraulikflüssigkeitsausgleichsraum
- 71: erster Hydraulikflüssigkeitsbetätigungsraum
- 72: zweiter Hydraulikflüssigkeitsbetätigungsraum
- 73: Kühlflüssigkeitsraum
- 74: Kupplungsglocke
- 75: erstes Kühlflüssigkeitsleitblech
- 76: zweites Kühlflüssigkeitsleitblech
- 77: Zylinder
- 78: Zylinder
- 80: Außenverzahnung
- 81: Blattfeder
- 82: Relativbewegung in Umfangsrichtung
- 83a: Schlitz
- 83b: Schlitz
- 83c: Schlitz
- 83d: Schlitz
- 83e: Schlitz
- 83f: Schlitz
- 84: Federstift
- 85: Federzylinder
- 86: axial begrenzter Abschnitt
- 87: O-Ring
- 88: O-Ring
- 89: Federblech
- 90: Zahn
- 91: Zahn
- 92: Ring
- 93: Ring
- 94: Ring
- 95: Federblech
- 96: Federblech
- 97: Vorspannungsrichtung
- 98: Vorspannungsrichtung
- 99: Winkelblech
- 100: Winkelblech
- 101: Federblech
- 102: Federblech
- 103: Einsteckvorgang
- 104: Federblech
- 105: Federblech
- 106: Flanke
- 107: Flanke
- 108: Winkelblech
- 109: Bereich ineinandergreifender Verzahnung
- 110: Feder
- 111: Verdrehungsrichtung
- 112: Verdrehungsrichtung
- 113: Symbolische Darstellung von Federelementen
- 114: Versetzungsrichtung
- 115: Verkippungsrichtung
- 116: Federelement
- 117: Federelement
- 118: Federelement

## Patentansprüche

1. Kupplungs-Kopplungseinrichtung zur Übertragung eines Drehmoments zwischen einem Antriebselement und einer Kupplung mit einer ersten Welle (17) und einer diese umgebenden zweiten Welle (15), wobei die beiden Wellen (17, 15) mittels einer in Umfangsrichtung formschlüssigen Verbindung miteinander gekoppelt sind, wobei
wenigstens ein elastisches Element zur Erzeugung einer Vorspannung in der formschlüssigen Verbindung vorgesehen ist, wobei die erzeugte Vorspannung in einer Größenordnung ist, die ein Klappern und die entsprechende Geräuschentwicklung bei Laständerungen verhindert oder zumindest verringert, aber durch ein Spiel ein Ausgleich von kleinen Relativbewegungen ermöglicht ist,
**dadurch gekennzeichnet, dass** wenigstens eine der Wellen (17, 15) auf wenigstens einem Teil ihres Umfangs einen axial abgeteilten und gegenüber dem übrigen Teil bewegbaren gesonderten Abschnitt (15a) aufweist, der auch einen Teil der formschlüssigen Verbindung aufweist und der in axialer und/oder radialer und/oder azimutaler Richtung und /oder durch eine Taumelbewegung gegenüber dem übrigen Teil der jeweiligen Welle (17, 15) elastisch verspannbar ist.

2. Kupplungs-Kopplungseinrichtung nach Anspruch 1,
**dadurch gekennzeichnet, dass**
die elastische Verspannung durch federelastische Elemente, insbesondere durch Elastomerelemente oder metallische Federn (110) realisiert ist, die an dem gesonderten Abschnitt (15a) einerseits und an dem übrigen Teil der jeweiligen Welle (17, 15)andererseits angreifen.

3. Kupplungs-Kopplungseinrichtung nach Anspruch 1 oder 2, **dadurch gekennzeichnet, dass**
der gesonderte Abschnitt (15a) ein zylindrischer Teilabschnitt der Welle (17, 159 ist, der durch Teilung der Welle (17,15) in Axialrichtung entsteht.

4. Kupplungs-Kopplungseinrichtung nach Anspruch 3,
**dadurch gekennzeichnet, dass**
der gesonderte Abschnitt (15a) an der Außenwelle gebildet ist, der einen Teil der Innenverzahnung aufweist, welche in die Außenverzahnung der inneren Welle eingreift.

## Claims

1. Clutch-coupling device for transmitting a torque between a drive element and a clutch, having a first shaft (17) and a second shaft (15), which encloses the first shaft, wherein the two shafts (17, 15) are coupled to one another by means of a connection which is form-fitting in a circumferential direction, wherein at least one elastic element is provided to establish prestressing in the form-fitting connection, wherein the prestressing established is in an order of magnitude which prevents, or at least reduces, rattling and the corresponding development of noise under changes in load, but an amount of play provides for the compensation of small relative movements,
**characterized in that**, on at least part of its circumference, at least one of the shafts (17, 15) has an axially divided-off, separate portion (15a), which can be moved in relation to the rest of the shaft and also has part of the form-fitting connection and can be braced elastically in the axial and/or radial and/or azimuthal direction, and/or by a tumbling movement, in relation to the rest of the respective shaft (17, 15).

2. Clutch-coupling device according to Claim 1,
**characterized in that**
the elastic bracing is realized by resilient elements, in particular by elastomer elements or metallic springs (110), which act on the separate portion (15a), on the one hand, and on the rest of the respective shaft (17, 15), on the other hand.

3. Clutch-coupling device according to Claim 1 or 2,
**characterized in that**
the separate portion (15a) is a cylindrical sub-portion of the shaft (17, 159, which is created by virtue of the shaft (17, 15) being divided in the axial direction.

4. Clutch-coupling device according to Claim 3,
**characterized in that**
the separate portion (15a) is formed on the outer shaft, which has part of the inner toothing formation, which engages in the outer toothing formation of the inner shaft.

## Revendications

1. Dispositif de couplage d'accouplement pour le transfert d'un couple entre un élément d'entraînement et un accouplement à un premier arbre (17) et à un deuxième arbre (15) entourant celui-ci, les deux arbres (17, 15) étant couplés l'un à l'autre au moyen d'une connexion par engagement par correspondance de formes dans la direction périphérique, au moins un élément élastique étant prévu pour générer une précontrainte dans la connexion par engagement par correspondance de formes, la précontrainte générée étant d'un ordre de grandeur qui empêche ou au moins réduit un claquement et le développement de bruits correspondants lors de variations de charges, mais une compensation de petits mouvements relatifs étant possible grâce à un jeu,
**caractérisé en ce**
**qu'**au moins l'un des arbres (17, 15) présente, sur au moins une partie de sa périphérie, une portion séparée (15a) divisée axialement et déplaçable par rapport à la partie restante, laquelle présente également une partie de la connexion par engagement par correspondance de formes et peut être serrée élastiquement dans la direction axiale et/ou radiale et/ou azimutale et/ou par un mouvement de nutation par rapport à la partie restante de l'arbre respectif (17, 15).

2. Dispositif de couplage d'accouplement selon la revendication 1,
**caractérisé en ce que**
le serrage élastique est réalisé par des éléments élastiques à ressort, en particulier par des éléments élastomères ou des ressorts métalliques (110), qui agissent d'une part au niveau de la portion séparée (15a) et d'autre part au niveau de la partie restante de l'arbre respectif (17, 15).

3. Dispositif de couplage d'accouplement selon la revendication 1 ou 2,
**caractérisé en ce que**
la portion séparée (15a) est une portion partielle cylindrique de l'arbre (17, 159 qui est formée par division de l'arbre (17, 15) dans la direction axiale.

4. Dispositif de couplage d'accouplement selon la revendication 3,
**caractérisé en ce que**
la portion séparée (15a) est formée au niveau de l'arbre extérieur qui présente une partie de la denture intérieure qui s'engage dans la denture extérieure de l'arbre intérieur.
